# EUROPÄISCHE PATENTSCHRIFT

(11) **EP 0 810 431 B1**
(45) Veröffentlichungstag und Bekanntmachung des Hinweises auf die Patenterteilung: **28.01.2004**
(21) Anmeldenummer: 97107393.7
(22) Anmeldetag: 05.05.1997
(51) Int. Cl.: G01N 27/416

(54) **Elektrochemischer Sensor**
Electrochemical sensor
Capteur électrochimique

(30) Priorität: 31.05.1996 DE 19621997
(43) Veröffentlichungstag der Anmeldung: 03.12.1997
(73) Patentinhaber: SIEMENS AKTIENGESELLSCHAFT, 80333 München (DE)
(72) Erfinder: Gumbrecht, Walter, Dr., 91074 Herzogenaurach (DE); Montag, Bernhard, 91301 Forchheim (DE); Kress, Reinhard, 91058 Erlangen (DE)

(56) Entgegenhaltungen:
- EP-A- 0 100 667
- WO-A-91/11710
- US-A- 5 376 255
- SENSORS AND ACTUATORS B, Bd. B02, Nr. 4, 1.Oktober 1990, LAUSANNE, CH, Seiten 291-295, XP000163052 TSUKADA K ET AL: "AN INTEGRATED CHEMICAL SENSOR WITH MULTIPLE ION AND GAS SENSORS"

## Beschreibung

Die vorliegende Erfindung betrifft einen elektrochemischen Sensor, der zur Bestimmung der Konzentrationen von Gasen wie z. B. O₂ oder CO₂ verwendet werden kann.

In US 5,376,255 ist ein Gassensor beschrieben, bei dem auf einem planaren Substrat aus Halbleitermaterial, z. B. Silizium, ein elektrochemischer Sensor ausgebildet ist. Dieser Sensor umfaßt eine pH-sensitive Elektrode, z. B. aus IrO₂ oder einen pH-sensitiven ISFET (Ion-Selective Field Effect Transistor). Bei einem derartigen Sensor ist unabhängig von der Ausführung, die an das zu bestimmende Gas (O₂, CO₂) angepaßt ist, eine vorzugsweise aus einem Edelmetall bestehende Elektrode vorhanden. Dieses Edelmetall ist z. B. Platin. Bei potentiometrischen Sensoren sind außerdem Silber/Silberchlorid-Elektroden vorhanden. Derjenige Teil des Sensors, der mit der betreffenden Grundstruktur versehen ist, ist mit einer Elektrolytschicht bedeckt. Diese Elektrolytschicht wird ringsum von einer ringförmigen Struktur aus Polyimid oder einem anderen Polymer wie z. B. Polybenzoxazol umgeben. Über der Elektrolytschicht und seitlich dazu ist eine hydrophobe Schicht aufgebracht, die ihrerseits von einer Polymer-Struktur umgeben ist. Diese äußere Polymer-Struktur ist entsprechend der größeren Dicke dieser hydrophoben Schicht höher als die Polymer-Struktur, die die Elektrolytschicht einfaßt. Bei dieser Anordnung tritt das Problem auf, daß zwischen der hydrophoben Schicht, die üblicherweise Polysiloxan ist, und der Polyimid-Struktur nur eine ungenügende Haftung vorliegt. Es bildet sich daher ein Riß zwischen der hydrophoben Schicht und der Einfassung. Wegen der geringen Dicke der hydrophoben Schicht von etwa 20 µm bis 30 µm hat diese Rißbildung zur Folge, daß eine zu untersuchende Analyseflüssigkeit (Elektrolytlösung oder Blut) eintreten kann und die Elektrode aus Edelmetall mit einer Gegenelektrode des Sensors oder elektrisch leitenden Bereichen der Sensorgrundstruktur kurzschließt oder gar die Elektrode korrodiert.

Aufgabe der vorliegenden Erfindung ist es, einen elektrochemischen Sensor als Halbleiterbauelement anzugeben, der in der eingangs beschriebenen Anordnung aufgebaut ist, bei dem aber das beschriebene Problem nicht auftritt.

Diese Aufgabe wird mit dem elektrochemischen Sensor mit den Merkmalen des Anspruches 1 gelöst. Weitere Ausgestaltungen ergeben sich aus den abhängigen Ansprüchen.

Der erfindungsgemäße Sensor löst das Problem dadurch, daß zwischen der Edelmetallelektrode des Sensors und der den Sensor nach oben abschließenden hydrophoben Schicht eine Schutzschicht aufgebracht ist, die vorzugsweise eine doppelte Schicht aus einem PECVD-Oxid und aus einem PECVD-Nitrid ist. Je nach dem für die hydrophobe Schicht verwendeten Material kann die Schutzschicht aus entsprechend angepaßten Materialien gewählt werden. Für die Funktion des Sensors ist ein Material mit hohem Diffusionskoeffizienten für das zu bestimmende Gas als Material für die hydrophobe Schicht erforderlich. Um eine ausreichende Schutzwirkung für die darunter angeordnete Edelmetallelektrode zu bieten, wird das Material der Schutzschicht so gewählt, daß es im Gegensatz zu dem Polymer der einfassenden Polymer-Struktur eine innige Verbindung mit der hydrophoben Schicht eingeht. Bevorzugt wird ein Material eingesetzt, das eine covalente Bindung mit der hydrophoben Schicht eingeht. Bei Verwendung von Polysiloxan für die hydrophobe Schicht kommen vorzugsweise verschiedene Oxide für die Schutzschicht in Frage. Bei Verwendung einer Nitridschicht, wie sie im Zuge der Herstellung von Halbleiterbauelementen z. B. als PECVD-Nitrid (Plasma Enhanced Chemical Vapor Deposition) abgeschieden wird, bildet sich an der Oberfläche dieser Schicht eine dünne oxidierte Schicht. Im Fall einer Siliziumnitridschicht (Si₃N₄) ist diese dünne Oxidschicht SiOₓN_{y}. Das für die Passivierung besonders geeignete Siliziumnitrid ist daher auch geeignet, eine kovalente und damit innige Bindung mit dem Material der hydrophoben Schicht einzugehen und auf diese Weise eine Abdichtung der hydrophoben Schicht zur Edelmetallelektrode hin zu bieten.

Es folgt eine genauere Beschreibung des erfindungsgemäßen Sensors anhand der Figuren 1 bis 3.
- Figur 1: zeigt eine typische Ausgestaltung des Sensors im Querschnitt.
- Figur 2: zeigt den in Figur 1 bezeichneten Schnitt.
- Figur 3: zeigt den in Figur 2 bezeichneten und zu dem Schnitt von Figur 1 im rechten Winkel verlaufenden Schnitt.

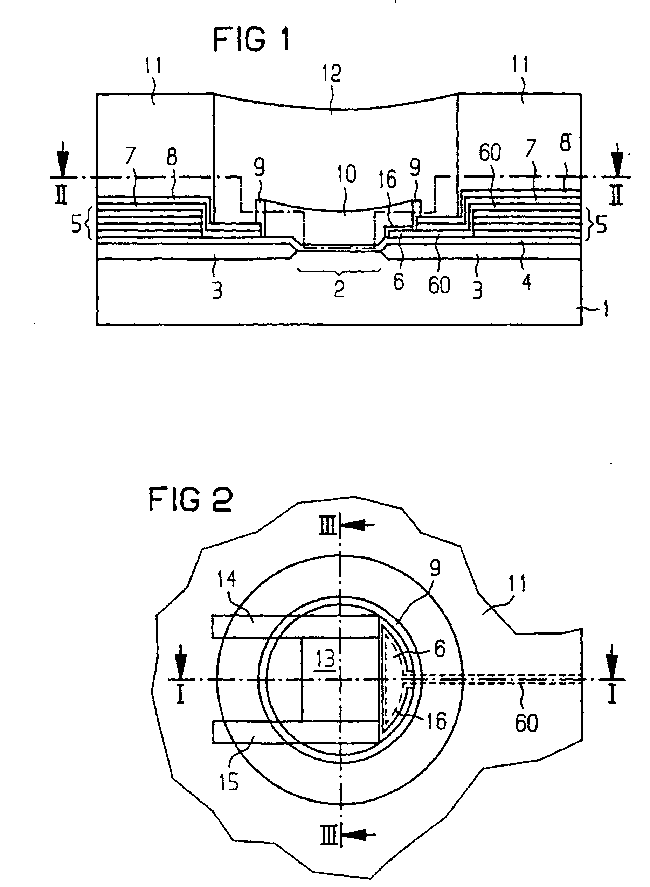

Bei der Anordnung der Figur 1 befindet sich auf einem Substrat 1, das z. B. Silizium oder dergleichen sein kann, eine Grundstruktur des Sensors, die in dem eingezeichneten einfachen Beispiel durch eine in dem Bereich 2 vorgesehene Struktur eines ISFET gebildet wird. Dieser Bereich 2 ist ringsum elektrisch isoliert, was in diesem Beispiel durch isolierende Bereiche 3 geschieht. Diese isolierenden Bereiche 3 können auf einem Siliziumsubstrat z. B. durch eine thermische Oxidation (LOCOS) hergestellt worden sein. Bei einer alternativen Ausführungsform des Sensors kann dieser isolierende Bereich 3 ganzflächig auch im Bereich des Sensors vorhanden sein, um die elektrischen Anschlüsse des Sensors gegen das Substrat 1 elektrisch zu isolieren. In dem in Figur 1 dargestellten Beispiel befindet sich über den genannten Bereichen ganzflächig eine Sensorschicht 4. Diese Sensorschicht 4 ist wie eingezeichnet ganzflächig aufgebracht oder zumindest in einem den Bereich 2 etwas überragenden Bereich vorhanden. Bei dieser Sensorschicht 4 kann es sich um eine elektrische Isolationsschicht zur Isolation gegenüber dem Material des Substrates 1 handeln. Als solche Isolatorschicht, wie sie z. B. bei einem amperometrischen Sensor verwendet wird, kann z. B. eine Oxidschicht (Siliziumoxid) oder eine Nitrid-Schicht (Si₃N₄) dienen. In dem beschriebenen etwas komplizierter aufgebauten Beispiel eines potentiometrischen Sensors, der einen ISFET umfaßt, besteht diese Sensorschicht 4 mindestens aus einer das Gateoxid des ISFET bildenden Oxidschicht und einer darauf vorzugsweise mittels LPCVD (Low Pressure Chemical Vapor Deposition) abgeschiedenen Nitrid-Schicht, die als pH-sensitive Schicht fungiert.

Auf dieser Grundstruktur wird die Elektrode aus Edelmetall, vorzugsweise z. B. Platin, aufgebracht. In dem in Figur 1 gezeigten Ausführungsbeispiel sind seitlich weitere Schichten 5 angeordnet, die z. B. aus verschiedenen Dielektrika bestehen und die z. B. für Integration weiterer Bauelemente oder verschiedener Metallisierungen oder Leiterbahnebenen von Verdrahtungen vorgesehen sind. Die Schicht aus Edelmetall, die im Bereich des Sensors die eigentliche Edelmetallelektrode 6 bildet, ist dann so aufgebracht, daß ein eine elektrische Zuleitung 60 bildender seitlicher Anteil sich auf der Oberseite der lateralen Schichten 5 befindet. Diese seitliche Zuleitung 60 kann auch zwischen den lateralen Schichten als eine der verschiedenen zwischen den Dielektrikumschichten vorgesehenen Leiterbahnebenen vorhanden sein. Diese elektrisch leitende Zuleitung aus dem vorgesehenen Edelmetall wird hier und in den Ansprüchen als ein Bestandteil der Edelmetallelektrode 6 aufgefaßt. Im Fall des in diesem Beispiel beschriebenen potentiometrischen Sensors mit ISFET ist insbesondere für die Messung der Konzentration von CO₂ auf der Edelmetallelektrode 6 aus Platin eine weitere Schicht 16 aufgebracht, die eine Ag/AgCl-Elektrode bildet. Diese Elektrode wird z. B. hergestellt, indem auf die Platinelektrode 6 eine dünne Schicht aus Silber abgeschieden wird und dieses Silber anschließend chemisch oder elektrochemisch chloriert wird. Die erfindungsgemäß vorgesehene Schutzschicht wird in diesem Beispiel durch eine doppelte Schicht gebildet, die aus einer PECVD-Oxidschicht 7 und einer PECVD-Nitridschicht 8 besteht. Das Oxid ist vorzugsweise Siliziumoxid (SiO₂); die Nitridschicht ist vorzugsweise Siliziumnitrid (Si₃N₄). Als Schutzschicht kann statt dessen eine einfache Schicht aus einem Oxid, vorzugsweise Siliziumoxid vorhanden sein. Für dieses Oxid kommt insbesondere TEOS (Tetraethylorthosilikat) in Frage. An der Oberfläche einer Si₃N₄-Schicht bildet sich ein Oxid, wenn diese Nitridschicht der Einwirkung von Sauerstoff ausgesetzt wird. Die Nitridschicht 8 in dem Beispiel besitzt daher an der Oberseite eine dünne Oxidschicht aus SiOₓN_{y}. Sie ist daher geeignet, über den Sauerstoff eine kovalente Bindung mit Polysiloxan, das für die hydrophobe Membran 12 verwendet werden kann, einzugehen.

Auf dem Grundbereich 2 des Sensors befindet sich innerhalb einer inneren Polymerstruktur 9 (z. B. Polyimid) eine Elektrolyt-Schicht 10. Statt Polyimid kann für die einfassende Struktur 9 ein anderes Polymer wie z. B. Polybenzoxazol verwendet werden. Über dieser Elektrolytschicht 10 und seitlich dazu befindet sich von einer äußeren Polymerstruktur 11 (z. B. aus Polyimid) eingefaßt eine hydrophobe Schicht 12. Wenn die den Sensor ringförmig umgebenden Schichten 5 weggelassen sind, ist die Schutzschicht 7, 8 ringförmig planar aufgebracht. Eine Stufe ergibt sich nur im Bereich der Edelmetallelektrode 6 und deren Zuleitung 60. Um diese Anordnung zu verdeutlichen, ist in Figur 2 der in Figur 1 strichpunktiert eingezeichnete Schnitt dargestellt. In Figur 2 sind erkennbar der von der äußeren Polymer-Struktur 11 eingenommene äußere Bereich, der den Gatebereich 13 des in diesem Beispiel vorhandenen ISFET bildende innere Halbleiterbereich, lateral dazu angeordnete Bereiche von Source 14 und Drain 15, die innere Polymerstruktur 9 und die Platinelektrode 6 mit der Zuleitung 60. An dem ins Innere der inneren Polymerstruktur 9 ragenden Anteil der Platinelektrode 6 ist noch die darauf und daran angrenzend aufgebrachte Elektrode 16 aus Ag/AgCl eingezeichnet. Die Zuleitung 60 für den elektrischen Anschluß der Elektrode 6 befindet sich als schmaler Streifen entweder in der Schichtebene der Elektrode 6 oder bei Vorhandensein der Dielektrikumschichten 5 in einer Stufe auf diese Schichten heraufgeführt. Die Schutzschicht 7, 8 befindet sich hinter der Zeichenebene im Bereich außerhalb der ringförmig eingezeichneten inneren Polymerstruktur 9. An den Rändern der Zuführung 60 zu der Elektrode 6 bildet die Schutzschicht 7, 8 Stufen.

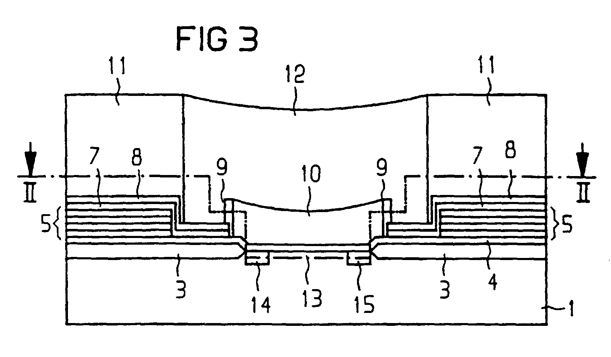

Figur 3 zeigt den weiteren in Figur 2 eingezeichneten Querschnitt. Zusätzlich zu den Bestandteilen, die in Figur 1 eingezeichnet sind, befinden sich in Figur 3 der Gate-Bereich 13, der Source-Bereich 14 und der Drain-Bereich 15 in dem Bereich der Grundstruktur des ISFET. Die Bereiche von Source und Drain sind hinter die Zeichenebene für elektrischen Anschuß nach außen verlängert; die Edelmetallelektrode 6 mit der Zuleitung 60 befindet sich vor der Zeichenebene.

Der erfindungsgemäße Sensor ist realisierbar auf der Grundlage einer im Prinzip beliebigen Struktur. Die Anordnung mit Edelmetallelektrode, darauf befindlicher Schutzschicht und darüber angeordneter hydrophober Membran ist realisierbar bei potentiometrischen, amperometrischen und konduktometrischen Sensoren. Bei den alternativen Ausführungsformen sind dann die entsprechenden Mittel vorgesehen bzw. gegenüber dem anhand der Figuren beschriebenen Ausführungsbeispiel weggelassen. Die in dem Substrat aus Halbleitermaterial ausgebildeten dotierten Bereiche 13, 14, 15 sind bei einem amperometrischen Sensor weggelassen. Bei einem derartigen Sensor befindet sich auf einer Isolationsschicht, die z. B. durch eine ganzflächige isolierende Schicht aus mittels LOCOS hergestelltem Siliziumdioxid bestehen kann, eine Anordnung von mindestens zwei, vorzugsweise von drei Elektroden. Diese Elektroden, zu denen mindestens eine Edelmetallelektrode entsprechend der Elektrode 6 des dargestellten Ausführungsbeispieles gehört, sind auf der Oberseite einer isolierenden Schicht im inneren Bereich des Sensors unter der Elektrolytschicht 10 angeordnet. Die Schutzschicht 7, 8 ist entsprechend der Anordnung des beschriebenen Ausführungsbeispieles mindestens im Bereich der Zuleitung zu einer Edelmetallelektrode zwischen diesem Edelmetall und der hydrophoben Schicht vorhanden. Die Schutzschicht unterbricht vorzugsweise aber den gesamten ringförmigen Bereich um die innere Polymerstruktur 9 herum und dichtet die hydrophobe Schicht 12 nach unten ab. Der konduktometrische Sensor unterscheidet sich davon dadurch, daß zwei Elektroden im Sensorbereich in relativ geringem Abstand zueinander angeordnet sind, um die Leitfähigkeit des dazwischen vorhandenen Materials der Elektrolytschicht zu messen. Diese Leitfähigkeit ändert sich als Folge der eingelassenen Gase.

## Patentansprüche

1. Elektrochemischer Sensor auf einem Substrat (1) mit minde -. stens einer Elektrode (6) aus einem Edelmetall,
a) bei dem über einem für einen elektrochemisch sensitiven Bereich (2) vorgesehenen Anteil des Substrates eine Elektrolytschicht (10) vorhanden ist, die ringsum von einer ersten Polymerstruktur (9) umgeben wird,
b) bei dem über dieser Elektrolytschicht (10) und ringsum seitlich dazu eine hydrophobe Schicht (12) vorhanden ist, die ringsum von einer zweiten Polymerstruktur (11) umgeben wird,
c) bei dem ein Anteil der Elektrode (6) zwischen dem Substrat und der Elektrolytschicht (10) angeordnet ist, **gekennzeichnet dadurch daß**
d) ein weiterer Anteil der Elektrode seitlich zu der Elektrolytschicht zwischen dem Substrat und der hydrophoben Schicht (12) angeordnet ist und
e) zwischen diesem weiteren Anteil der Elektrode und der hydrophoben Schicht eine Schutzschicht (7, 8) vorhanden ist.

2. Sensor nach Anspruch 1,
bei dem die hydrophobe Schicht (12) aus einem Material besteht, das einen hohen Diffusionskoeffizienten für mindestens ein bestimmtes Gas aufweist und
bei dem die Schutzschicht (7, 8) aus einem Material besteht, das mit dem Material der hydrophoben Schicht (12) eine kovalente Bindung eingeht.

3. Sensor nach Anspruch 2,
bei dem die hydrophobe Schicht (12) ein Polysiloxan ist und
bei dem zumindest ein an die hydrophobe Schicht angrenzender Schichtanteil der Schutzschicht sauerstoffhaltig ist.

4. Sensor nach Anspruch 3,
bei dem die Schutzschicht eine Oxidschicht umfaßt.

5. Sensor nach Anspruch 4,
bei dem die Oxidschicht ein Siliziumoxid ist.

6. Sensor nach Anspruch 5,
bei dem die Oxidschicht SiOₓN_{y} ist.

7. Sensor nach Anspruch 6,
bei dem die Oxidschicht ein oberer Schichtanteil einer Siliziumnitridschicht ist.

8. Sensor nach einem der Ansprüche 3 bis 7,
bei dem die Schutzschicht durch eine doppelte Schicht (7, 8) aus einer Oxidschicht (7) und einer Nitridschicht (8) gebildet wird,
bei dem die Oxidschicht auf der Elektrode (6) angeordnet ist und
bei dem die Nitridschicht (8) zwischen der Oxidschicht und der hydrophoben Schicht (12) angeordnet ist.

9. Sensor nach einem der Ansprüche 4 bis 7,
bei dem die Oxidschicht eine PECVD-Oxidschicht ist.

10. Sensor nach Anspruch 7 oder 8,
bei dem die Nitridschicht eine PECVD-Nitridschicht ist.

## Claims

1. Electrochemical sensor on a substrate (1), having at least one electrode (6) made from a precious metal,
a) in which an electrolyte layer (10), which is annularly surrounded by a first polymer structure (9), is present over a proportion of the substrate which is intended for an electrochemically sensitive region (2),
b) in which a hydrophobic layer (12), which is annularly surrounded by a second polymer structure (11), is present above this electrolyte layer (10) and surrounding it laterally in the form of a ring,
c) in which a proportion of the electrode (6) is arranged between the substrate and the electrolyte layer (10), **characterized in that**
d) a further proportion of the electrode is arranged to the side of the electrolyte layer, between the substrate and the hydrophobic layer (12), and
e) a protective layer (7, 8) is present between this further proportion of the electrode and the hydrophobic layer.

2. Sensor according to Claim 1,
in which the hydrophobic layer (12) consists of a material which has a high diffusion coefficient for at least one specific gas, and
in which the protective layer (7, 8) consists of a material which forms a covalent bond with the material of the hydrophobic layer (12).

3. Sensor according to Claim 2, in which the hydrophobic layer (12) is a polysiloxane, and in which at least a proportion of the protective layer which adjoins the hydrophobic layer contains oxygen.

4. Sensor according to Claim 3, in which the protective layer comprises an oxide layer.

5. Sensor according to Claim 4, in which the oxide layer is a silicon oxide.

6. Sensor according to Claim 5, in which the oxide layer is SiOₓN_{y}.

7. Sensor according to Claim 6, in which the oxide layer is an upper proportion of a silicon nitride layer.

8. Sensor according to one of Claims 3 to 7,
in which the protective layer is formed by a double layer (7, 8) comprising an oxide layer (7) and a nitride layer (8),
in which the oxide layer is arranged on the electrode (6), and
in which the nitride layer (8) is arranged between the oxide layer and the hydrophobic layer (12).

9. Sensor according to one of Claims 4 to 7, in which the oxide layer is a PECVD oxide layer.

10. Sensor according to Claim 7 or 8, in which the nitride layer is a PECVD nitride layer.

## Revendications

1. Capteur électrochimique sur un substrat (1) avec au moins une électrode (6) réalisée en un métal noble, dans lequel
a) se trouve, au-dessus d'une partie du substrat prévue pour une zone (2) électrochimiquement sensible, une couche électrolytique (10) entourée sur tout son pourtour par une première structure polymère (9),
b) se trouve, au dessus de ladite couche électrolytique (10) et latéralement tout autour de celle-ci, une couche hydrophobe (12) entourée sur tout son pourtour par une deuxième structure polymère (11),
c) une partie de l'électrode (6) est placée entre le substrat et la couche électrolytique (10),
**caractérisé en ce que**
d) une autre partie de l'électrode est placée latéralement par rapport à la couche électrolytique entre le substrat et la couche hydrophobe (12) et **en ce que**
e) entre cette autre partie de l'électrode et la couche hydrophobe se trouve une couche de protection (7, 8).

2. Capteur selon la revendication 1, dans lequel la couche hydrophobe (12) se compose d'un matériau ayant un coefficient de diffusion élevé pour au moins un gaz déterminé et dans lequel la couche de protection (7, 8) se compose d'un matériau formant une liaison covalente avec le matériau de la couche hydrophobe (12).

3. Capteur selon la revendication 2, dans lequel la couche hydrophobe (12) est un polysiloxane et dans lequel au moins une partie de la couche de protection adjacente à la couche hydrophobe contient de l'oxygène.

4. Capteur selon la revendication 3, dans lequel la couche de protection comprend une couche d'oxyde.

5. Capteur selon la revendication 4, dans lequel la couche d'oxyde est un oxyde de silicium.

6. Capteur selon la revendication 5, dans lequel la couche d'oxyde est du SiOₓN_{y}.

7. Capteur selon la revendication 6, dans lequel la couche d'oxyde est une partie supérieure d'une couche de nitrure de silicium.

8. Capteur selon l'une des revendications 3 à 7, dans lequel
- la couche de protection est constituée par une double couche (7, 8) composée d'une couche d'oxyde (7) et d'une couche de nitrure (8),
- la couche d'oxyde est située sur l'électrode (6) et
- la couche de nitrure (8) est située entre la couche d'oxyde et la couche hydrophobe (12).

9. Capteur selon l'une des revendications 4 à 7, dans lequel la couche d'oxyde est une couche d'oxyde PECVD.

10. Capteur selon la revendication 7 ou 8, dans lequel la couche de nitrure est une couche de nitrure PECVD.
